# EUROPEAN PATENT APPLICATION

(11) **EP 4 794 277 A1**
(43) Date of publication of application: **19.08.2026**
(21) Application number: 26156819.0
(22) Date of filing: 06.02.2026
(51) Int. Cl.: H04L 12/66

(54) **GATEWAY DEVICE, NON-TRANSITORY COMPUTER-READABLE RECORDING MEDIUM, AND INFORMATION PROCESSING METHOD**

(30) Priority: 18.02.2025 JP 2025024335
(71) Applicant: KYOCERA Document Solutions Inc., Osaka-shi, Osaka 540-8585 (JP)
(72) Inventor: ARAKAWA, Hiroki, Osaka-shi, 540-8585 (JP)
(74) Representative: IPAZ

(57) **Abstract**

A gateway device is connected between a server device and at least one of one or more client devices for the server device, the server device and the one or more client devices being connected to each other via a network, the gateway device including a control circuit that obtains device information from the one or more client devices at predetermined polling intervals, and displays on a display device a menu screen for displaying a smart polling button and displays, when the smart polling button is operated by a user, a smart polling screen for displaying the polling intervals individually set for the one or more client devices.

## Description

### Incorporation by Reference

This application claims the benefit of Japanese Priority Patent Application JP 2025-024335 filed February 18, 2025, the entire contents of which are incorporated herein by reference.

### Field

The present disclosure relates to a gateway device that is connected between a server device and a client device, a non-transitory computer-readable recording medium on which a gateway program is recorded, and an information processing method.

### Background

There is known a gateway device that is connected between a server device and a client device and monitors the client device. The server device provides a client application. The client application is installed on the client device.

### Summary

In gateway devices, a problem is conceivable, in which device information such as counter information (the number of printed sheets) of a client device (e.g., an image forming device such as MFP) is not updated. The gateway device obtains device information from the client device at regular intervals (polling intervals). The polling intervals vary depending on the number of connected client devices or the type of obtained device information. For example, if many client devices are connected, the polling intervals become longer, and when the polling intervals overlap with the timing of power-off of the client devices, the gateway device may fail to obtain the device information. In addition, since the control of the polling intervals is automatically adjusted inside the gateway device, it is difficult for a user to know the reason why the gateway device fails to obtain the device information. It is conceivable that, if the polling intervals and the like can be checked on the gateway device, the failure to obtain the device information that is due to the polling intervals can be suppressed.

In view of the circumstances as described above, it is desirable to enable the check of the polling intervals and the like on the gateway device and further suppress the failure to obtain the device information that is due to the polling intervals.

A gateway device according to an embodiment of the present disclosure is connected between a server device and at least one of one or more client devices for the server device, the server device and the one or more client devices being connected to each other via a network, the gateway device including
a control circuit that
obtains device information from the one or more client devices at predetermined polling intervals, and
displays on a display device a menu screen for displaying a smart polling button and displays, when the smart polling button is operated by a user, a smart polling screen for displaying the polling intervals individually set for the one or more client devices.

A gateway program recorded on a non-transitory computer-readable recording medium according to another embodiment of the present disclosure causes a control circuit of a gateway device, which is connected between a server device and at least one of one or more client devices for the server device, the server device and the one or more client devices being connected to each other via a network, to operate to:
obtain device information from the one or more client devices at predetermined polling intervals; and
display on a display device a menu screen for displaying a smart polling button and display, when the smart polling button is operated by a user, a smart polling screen for displaying the polling intervals individually set for the one or more client devices.

An information processing method according to another embodiment of the present disclosure includes:
when a control circuit of a gateway device, which is connected between a server device and at least one of one or more client devices for the server device, the server device and the one or more client devices being connected to each other via a network, executes a gateway program,
obtaining device information from the one or more client devices at predetermined polling intervals; and
displaying on a display device a menu screen for displaying a smart polling button and displaying, when the smart polling button is operated by a user, a smart polling screen for displaying the polling intervals individually set for the one or more client devices.

These and other objects, features and advantages of the present disclosure will become more apparent in light of the following detailed description of best mode embodiments thereof, as illustrated in the accompanying drawings.

### Brief Description of Figures

Fig. 1 shows a network system configuration including a gateway device according to an embodiment of the present disclosure;
Fig. 2 shows a hardware configuration of the gateway device;
Fig. 3 shows a hardware configuration of a client device;
Fig. 4 shows a GUI (menu bar) of the gateway device;
Fig. 5 shows a GUI (smart polling screen) of the gateway device;
Fig. 6 shows default values of polling intervals;
Fig. 7 shows activity rating values;
Fig. 8 shows the polling interval for each priority category;
Fig. 9 shows a GUI (device list screen);
Fig. 10 shows a GUI (performance indicator);
Fig. 11 shows a GUI (performance indicator); and
Fig. 12 shows an estimated number of requests per hour.

### Detailed Description

Hereinafter, an embodiment of the present disclosure will be described with reference to the drawings.

### 1. Network System Configuration

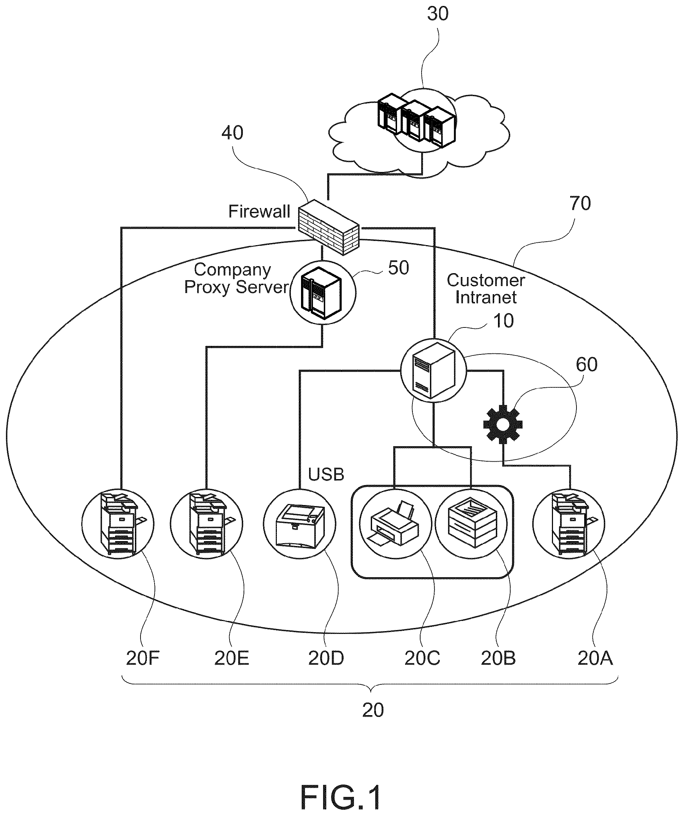

Fig. 1 shows a network system configuration including a gateway device according to an embodiment of the present disclosure.

A server device 30 provides a client application to client devices 20. The server device 30 is connected to a firewall 40. The firewall 40 is the most upstream device in a customer intranet 70 to which the client application is provided. A gateway device 10 and a company proxy server 50 are connected to the firewall 40 on the downstream thereof. A proxy server 60 is connected to the gateway device 10 on the downstream thereof.

The client devices 20 are electronic devices used by customer end users and are, for example, image forming devices such as multifunction peripherals (MFPs). The client devices 20 have the following types, for example. A client device 20A is connected to the proxy server 60 on the downstream of the gateway device 10. A client device 20B is a device of another company and is connected to the gateway device 10. A client device 20C is a legacy device and is connected to the gateway device 10. A client device 20D is connected to the gateway device 10 via a USB, not a network. A client device 20E is connected to the company proxy server 50. A client device 20F is connected to the firewall 40.

The gateway device 10 is connected between the server device 30 and at least one of one or more client devices 20 (client devices 20A to 20D) for the server device 30, the server device 30 and the one or more client devices 20 being connected to each other via a network. The gateway device 10 monitors the client devices 20 (all the client devices 20A to 20F) in cooperation with the server device 30. The gateway device 10 is an information processing device (personal computer or the like), on which a gateway application is installed and which executes the gateway application, and is used by a person in charge on a customer end (user).

### 2. Hardware Configuration of Gateway Device

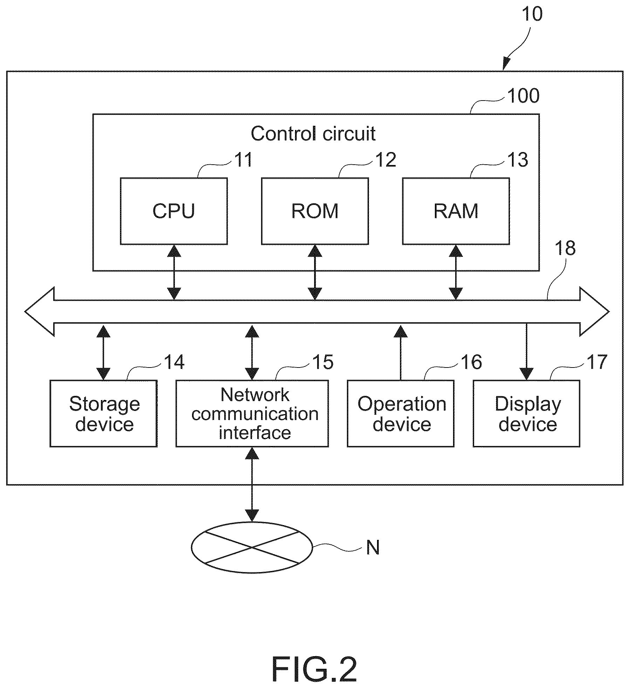

Fig. 2 shows a hardware configuration of the gateway device.

The gateway device 10 includes a central processing unit (CPU) 11, a read only memory (ROM) 12, a random access memory (RAM) 13, a large-capacity, nonvolatile storage device 14 such as a hard disk drive (HDD) or a solid state drive (SSD), a network communication interface 15, an operation device 16, a display device 17, and a bus 18 that connects those above components to each other.

The CPU 11, the ROM 12, and the RAM 13 constitute a control circuit 100. The CPU 11 loads an information processing program stored in the ROM 12 to the RAM 13 and executes the information processing program. The ROM 12 fixedly stores programs, data, and the like to be executed by the CPU 11. The ROM 12 is an example of a non-transitory computer-readable recording medium.

### 3. Hardware Configuration of Client Device

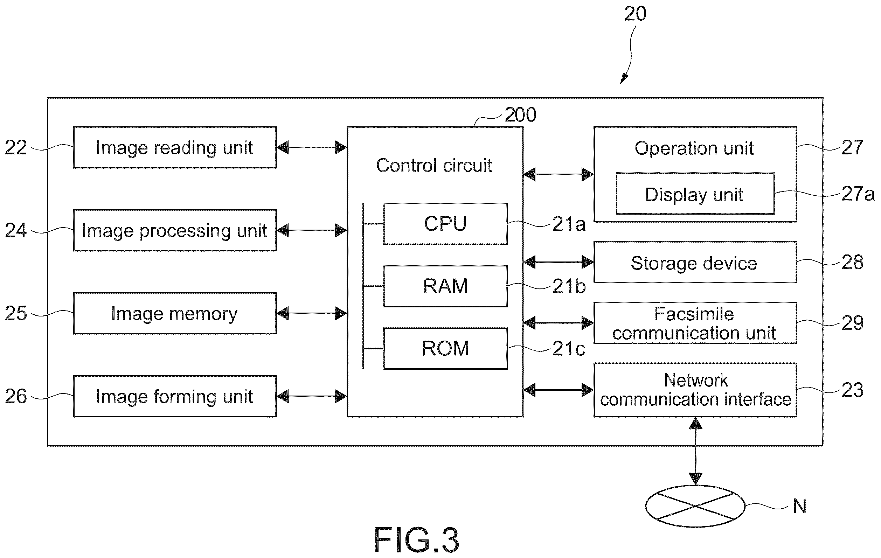

Fig. 3 shows a hardware configuration of the client device.

An image forming device that is the client device 20 includes a control circuit 200 constituting a computer. The control circuit 200 includes a CPU 21a as a processor, a RAM 21b, a ROM 21c as a memory, a dedicated hardware circuit, and the like and controls the overall operation of the image forming device 20. The CPU 21a loads an information processing program stored in the ROM 21c to the RAM 21b and executes the information processing program, thus executing the operation to be described in the following operation flow and controlling the display and input of an operation on a touch panel 27. The ROM 21c fixedly stores programs, data, and the like to be executed by the CPU 21a. The ROM 21c is an example of a non-transitory computer-readable recording medium.

The control circuit 200 is connected to an image reading unit 22 (image scanner), an image processing unit 24 (including a graphics processing unit (GPU)), an image memory 25, an image forming unit 26 (printer), a touch panel (front panel) 27 as an operation unit including a display unit 27a, a large-capacity, nonvolatile storage device 28 such as an HDD or an SSD, a facsimile communication unit 29, a network communication interface 23 (communication unit), and the like. The control circuit 200 controls the operations of the respective connected units or transmits and receives signals or data to and from the units. The operation unit of the touch panel 27 is an example of an input device, and a sound input device including a microphone may be provided as the input device.

### 4. Operation of Gateway Device

The control circuit 100 of the gateway device 10 obtains multiple different types of device information from one or more (in this example, multiple) client devices 20 at predetermined polling intervals. The multiple different types of device information are, for example, a toner level, a counter (the number of printed sheets), and an alert.

The control circuit 100 may set a fixed value for a polling interval of a client device 20 connected to the gateway device 10 without using a network independently from the polling intervals of other client devices 20. Specifically, the control circuit 100 may collect the device information of the client device 20D connected via a USB at every fixed polling intervals (e.g., 10 minutes) regardless of the settings of the polling intervals.

On the other hand, the control circuit 100 does not obtain, by polling (excludes from polling), the device information of the client devices 20E and 20F connected to the server device 30 without being connected to the gateway device 10. Conversely, the control circuit 100 obtains, by polling, the device information of the client devices 20A to 20D connected to the gateway device 10 via a network or a USB.

The control circuit 100 only needs to use a WSD protocol with significant security when accessing the client devices 20 by polling. When the access fails, the control circuit 100 only needs to retry the access using an SNMP protocol.

The polling intervals of the multiple client devices 20 can be set individually. Hereinafter, the settings of the polling intervals will be described.

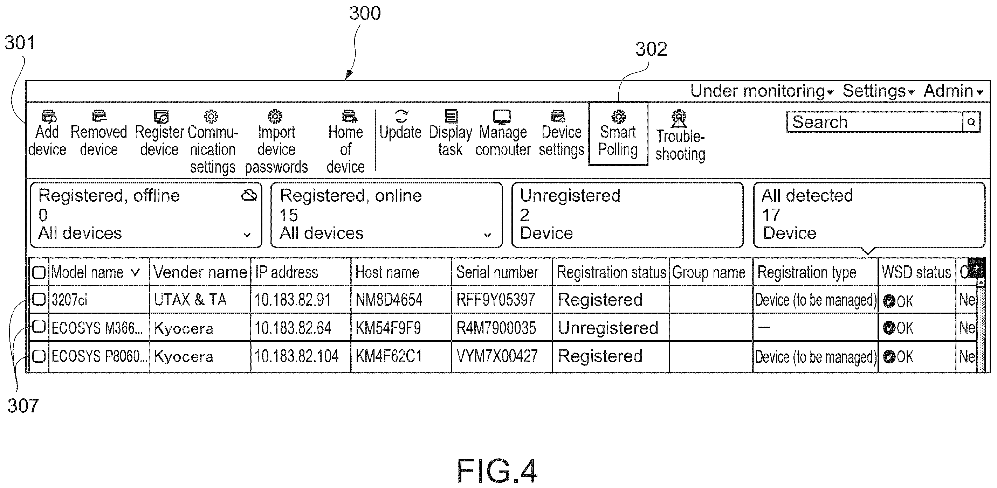

Fig. 4 shows a GUI (menu bar) of the gateway device.

The control circuit 100 displays a GUI 300 for manager on the display device 17. The GUI 300 includes a menu bar 301. The menu bar 301 displays a smart polling button 302. The smart polling button 302 is a button for displaying the polling intervals individually set for the respective client devices 20, the load, and the like. When one client device 20 is selected in a checkbox 307 and the smart polling button 302 is operated by the user, the control circuit 100 displays a smart polling screen 303. Note that only one polling interval is set as the gateway device 10. The client devices 20 are classified into categories according to activity rating, and the polling intervals are automatically corrected for each category. For example, when the polling interval of the gateway device 10 is set to 6 hours, the correction is performed to obtain the polling interval of the category 1: 6 hours, the polling interval of the category 2: 7.5 hours, the polling interval of the category 3: 9 hours, and the polling interval of the category 3: 10.5 hours.

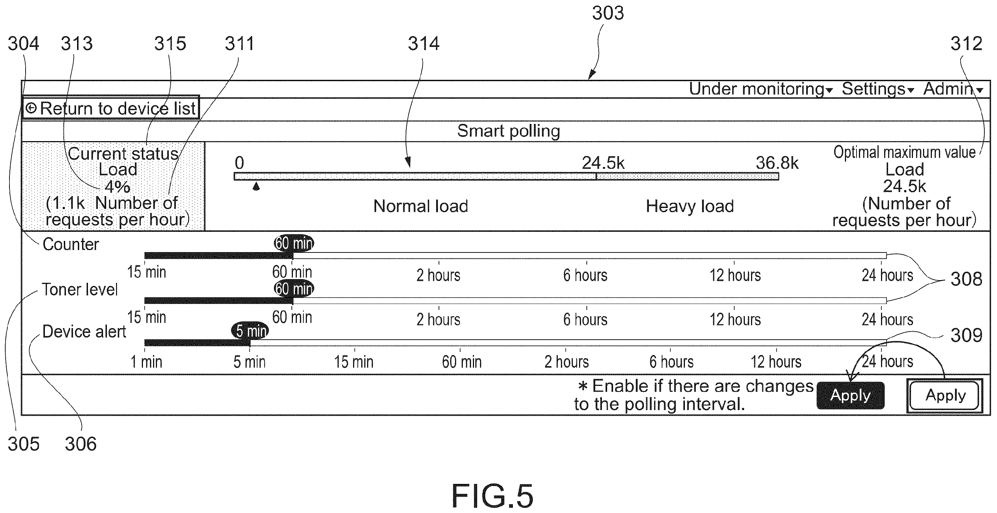

Fig. 5 shows a GUI (smart polling screen) of the gateway device.

The control circuit 100 can individually set the polling intervals used when obtaining multiple different types of device information from the multiple client devices 20 for each of the multiple different types of device information. The multiple different types of device information include, for example, a counter 304 (the number of printed sheets), a toner level 305, an alert 306, and the like. On the smart polling screen 303, the polling intervals can be set for the counter 304, the toner level 305, the alert 306, and the like individually and independently.

The setting values (options) of the polling interval that can be set for a first type of device information are different from the setting values (options) of the polling interval that can be set for a second type of device information, the second type being different from the first type. For example, a polling interval 308 (15 minutes, 60 minutes, 120 minutes, 360 minutes (6 hours), 720 minutes (12 hours), and 1440 minutes (24 hours)) can be set for the counter 304 and the toner level 305 (first type of device information). On the other hand, a polling interval 309 (1 minute, 5 minutes, and others that are the same as the polling interval 308) can be set for the alert 306 (second type of device information).

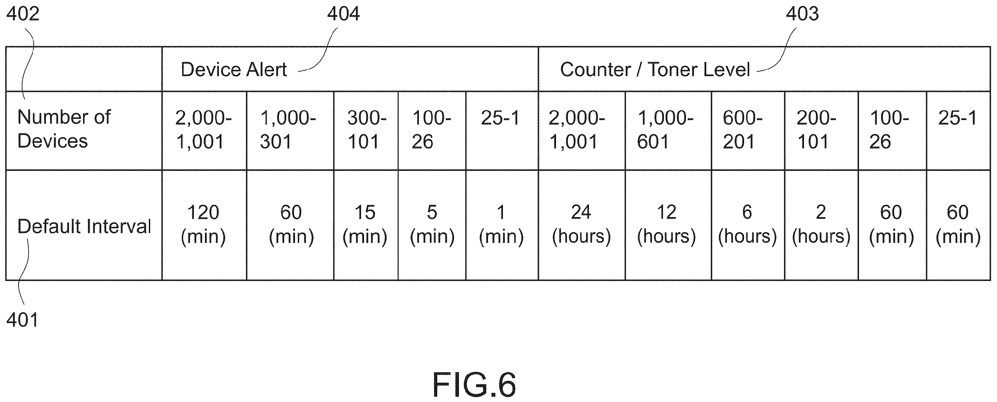

Fig. 6 shows default values of the polling interval.

The control circuit 100 determines a default value 401 of the polling interval in accordance with the number 402 of multiple client devices 20 registered in the gateway device 10. A default value 403 of the polling interval of the counter 304 and the toner level 305 may be different from a default value 404 of the polling interval of the alert 306. A use case in which the default value is determined may be, for example, a case in which a smart polling function is added when the gateway device 10 is updated or a case in which a client device 20 is registered for the first time since the gateway program is installed on the gateway device 10.

The control circuit 100 may individually set the polling interval for each of the multiple client devices 20 in accordance with an activity rating value for each of the multiple client devices 20. Each client device 20 holds its own activity rating value. The control circuit 100 may adjust the polling interval for each of the client devices 20 in accordance with the activity rating value of each client device 20. For example, the control circuit 100 does not adjust the polling interval to be longer for a client device 20 that executes a print job with a high frequency or has errors such as jam (paper jam). The control circuit 100 only needs to adjust the polling interval to be longer for a client device 20 that is used with a low frequency.

The activity rating value increases each time the device information of each client device 20 (counter, toner level, alert, etc.) is changed. The amount of increase may vary for each type of device information (counter, toner level, alert, etc.). The control circuit 100 only needs to calculate the activity rating value after the increase by using the activity rating value before the increase + (the amount of increase x adjustment parameter). Specifically, the control circuit 100 only needs to calculate the activity rating value after the increase by the following formula. 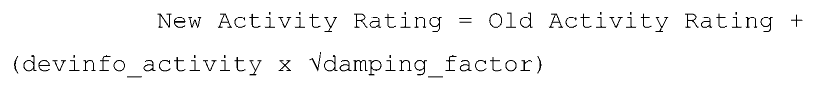New Activity Rating = Old Activity Rating + (devinfo_activity x √damping_factor)

The "devinfo_activity" is the amount of increase in activity rating value, for example, the alert: 30, the counter: 1, and the toner level: 1.

The "damping_factor" is an adjustment parameter. As the numerical value becomes larger, the amount of increase in activity rating value becomes smaller. The "damping_factor" may start from 1, increase by 1 each time the device information is changed, and may be reset regularly (e.g., one day).

The upper limit of the activity rating value may be 100, for example. The activity rating value of a newly detected client device 20 may be, for example, 50. The activity rating may be damped to the half of the current value for every 24 hours.

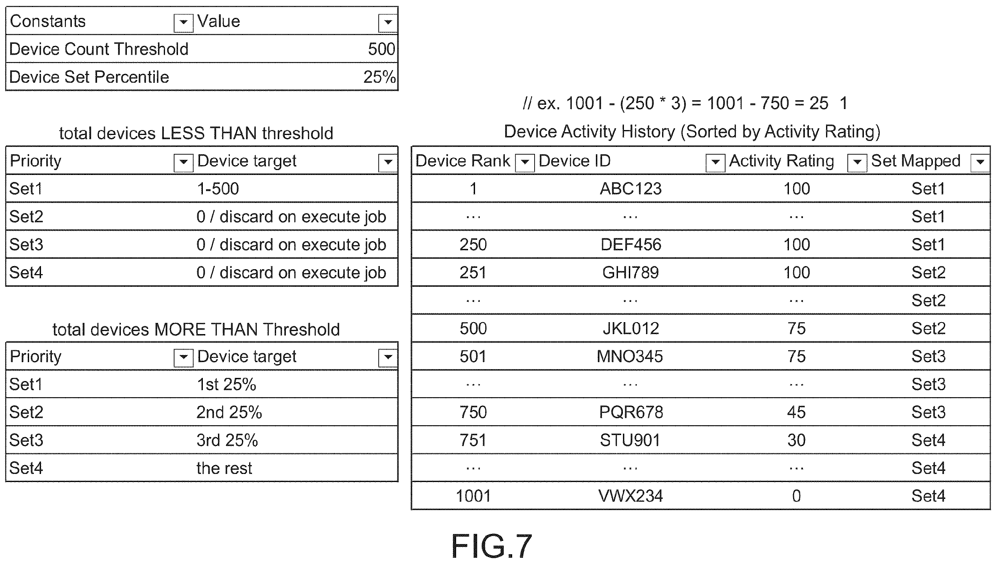

Fig. 7 shows the activity rating value.

The control circuit 100 sorts the multiple client devices 20 on the basis of the activity rating values during polling and classifies them into multiple (in this example, four) priority categories (Set1, Set2, Set3, and Set4).

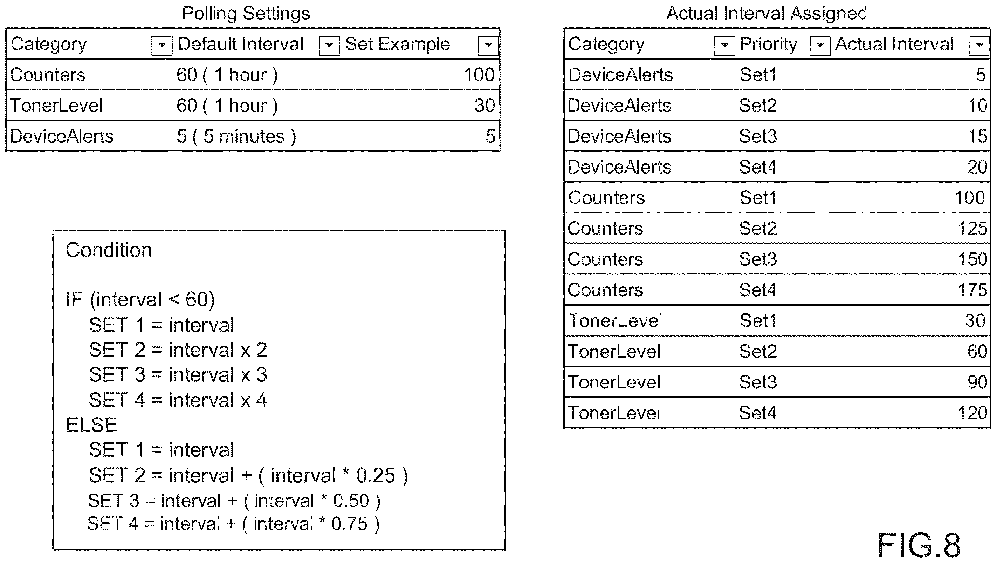

Fig. 8 shows the polling interval for each priority category.

The control circuit 100 may set the polling interval to be longer as the priority category becomes lower. For example, the control circuit 100 may set the polling interval of the highest priority category Set1 to be shortest (alert: 5 minutes, counter: 100 minutes, toner level: 30 minutes), and set the polling interval of the lowest priority category Set4 to be longest (alert: 20 minutes, counter: 175 minutes, toner level: 120 minutes).

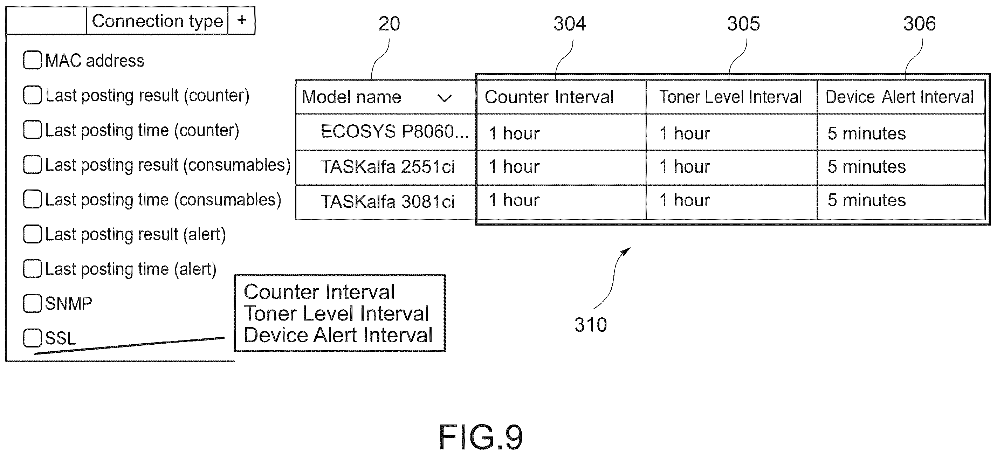

Fig. 9 shows a GUI (device list screen).

The control circuit 100 may display, on a device list screen 310, polling intervals adjusted for each client device 20 and for each piece of device information (counter 304, toner level 305, alert 306).

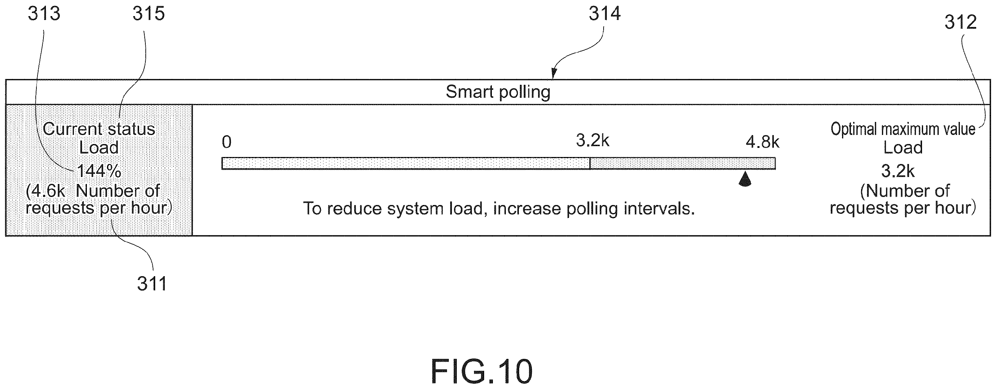

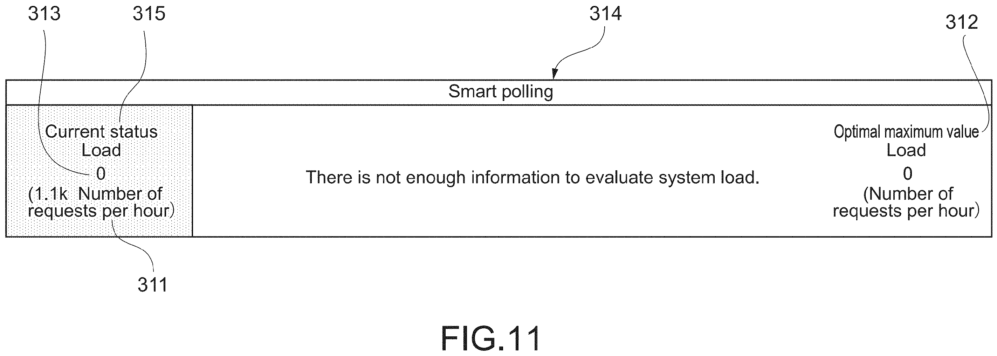

Figs. 10 and 11 each show a GUI (performance indicator).

The control circuit 100 displays a performance indicator 314 on the smart polling screen 303. The performance indicator 314 displays a current estimated number of requests per hour 311, an optimal maximum number of requests per hour 312, and a load (%) 313.

As shown in Fig. 10, when the load 313 is heavy, the control circuit 100 changes, for example, the background color of a display area 315 for the load 313 in the performance indicator 314 to a red color or the like to give an instruction to increase the polling interval.

As shown in Fig. 11, when the gateway program is just started, there is not enough data related to the system performance to present the optimal load value 312, and thus the control circuit 100 does not display the performance indicator 314.

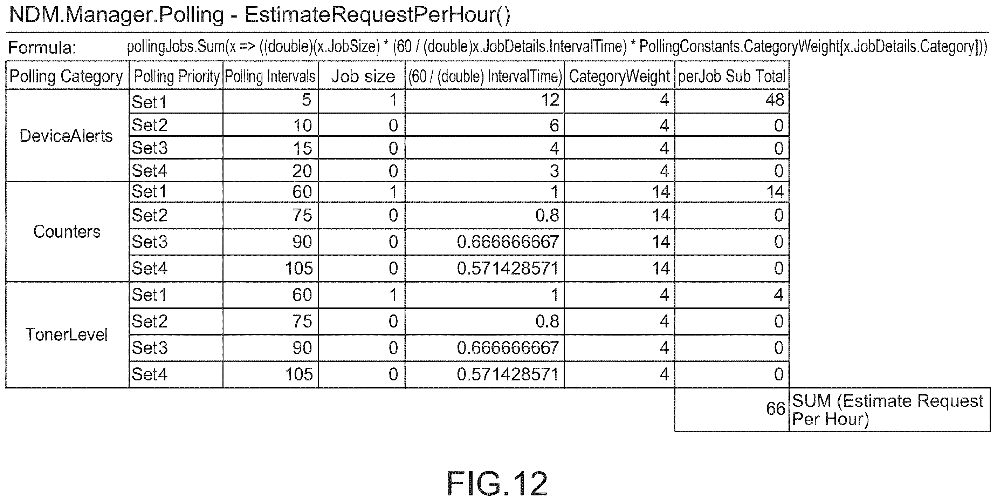

Fig. 12 shows the estimated number of requests per hour.

The control circuit 100 sums the values calculated for each device information and priority category by the following formula, as the current estimated number of requests per hour 311. 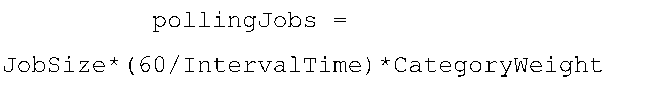pollingJobs = JobSize*(60/IntervalTime)*CategoryWeight

"JobSize" is the number of client devices 20 classified into the priority categories.

"CategoryWeight" is the weight of the number of requests in each piece of device information, for example, the alert: 4, the counter: 14, and the toner level: 4.

The control circuit 100 calculates the optimal maximum number of requests per hour 312 by the following formula. 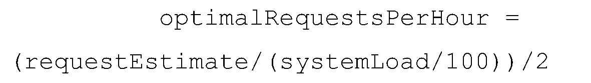optimalRequestsPerHour = (requestEstimate/(systemLoad/100))/2

"requestEstimate" is the current estimated number of requests per hour 311.

"systemLoad" is the greater of the CPU use rate and the memory use rate of the gateway program, and is the optimal maximum number of requests when systemLoad is 50%.

The control circuit 100 calculates the current estimated number of requests per hour 311 and the optimal maximum number of requests per hour 312 at a timing when the smart polling screen 303 is opened, when the polling interval is set, and other timings.

In gateway devices, a problem is conceivable, in which device information such as counter information (the number of printed sheets) of a client device (e.g., an image forming device such as MFP) is not updated. The gateway device obtains device information from the client device at regular intervals (polling intervals). The polling intervals vary depending on the number of connected client devices or the type of obtained device information. For example, if many client devices are connected, the polling intervals become longer, and when the polling intervals overlap with the timing of power-off of the client devices, the gateway device may fail to obtain the device information. In addition, since the control of the polling intervals is automatically adjusted inside the gateway device, it is difficult for a user to know the reason why the gateway device fails to obtain the device information.

In contrast, according to this embodiment, if the polling intervals and the like can be checked on the gateway device, the failure to obtain the device information due to the polling intervals can be suppressed. According to this embodiment, adding a smart polling function to the gateway device 10 and enabling a user to set the polling intervals and check the network load by polling makes it possible to suppress the failure to obtain the device information due to the polling intervals.

Although each embodiment and each modified example of the present technology have been described above, the present technology is not limited to the above-mentioned embodiments, and various modifications can be made without departing from the gist of the present technology as a matter of course.

## Claims

1. A gateway device (10) that is connected between a server device (30) and at least one of one or more client devices (20) for the server device (30), the server device (30) and the one or more client devices (20) being connected to each other via a network, the gateway device (10) comprising
a control circuit (100) that
obtains device information from the one or more client devices (20) at predetermined polling intervals, and
displays on a display device (17) a menu screen for displaying a smart polling button and displays, when the smart polling button is operated by a user, a smart polling screen for displaying the polling intervals individually set for the one or more client devices (20).

2. The gateway device (10) according to claim 1,
wherein
the control circuit (100) is capable of individually setting the polling intervals used when multiple different types of device information are obtained from the one or more client devices (20), for each of the multiple different types of device information.

3. The gateway device (10) according to claim 2,
wherein
a setting value of the polling interval that can be set for a first type of device information is different from a setting value of the polling interval that can be set for a second type of device information, the second type being different from the first type.

4. The gateway device (10) according to claim 1,
wherein
the control circuit (100) determines default values of the polling intervals in accordance with the number of the one or more client devices (20) registered in the gateway device (10).

5. The gateway device (10) according to claim 1,
wherein
the control circuit (100)
sets a fixed value for a polling interval of a client device (20) connected to the gateway device (10) without using the network, independently from the polling intervals of other client devices (20), and
avoids obtaining, by polling, the device information of the client device (20) that is connected to the server device (30) and not connected to the gateway device (10).

6. The gateway device (10) according to claim 1,
wherein
the control circuit (100) individually sets the polling interval for each of the one or more client devices (20) in accordance with an activity rating value for each of the one or more client devices (20),
the activity rating value increases each time the device information of each client device (20) is changed, and an amount of the increase varies depending on a type of device information, and
the activity rating value after the increase is calculated by using the activity rating value before the increase + (the amount of increase x an adjustment parameter).

7. The gateway device (10) according to claim 6,
wherein
the control circuit (100) sorts the one or more client devices (20) with the activity rating values during execution of polling, classifies the one or more client devices (20) into multiple priority categories, and sets the polling interval to be longer as the priority category becomes lower.

8. A non-transitory computer-readable recording medium with a gateway program recorded thereon, the gateway program causing a control circuit (100) of a gateway device (10), which is connected between a server device (30) and at least one of one or more client devices (20) for the server device (30), the server device (30) and the one or more client devices (20) being connected to each other via a network, to operate to:
obtain device information from the one or more client devices (20) at predetermined polling intervals; and
display on a display device (17) a menu screen for displaying a smart polling button and display, when the smart polling button is operated by a user, a smart polling screen for displaying the polling intervals individually set for the one or more client devices (20).

9. An information processing method, comprising:
when a control circuit (100) of a gateway device (10), which is connected between a server device (30) and at least one of one or more client devices (20) for the server device (30), the server device (30) and the one or more client devices (20) being connected to each other via a network, executes a gateway program,
obtaining device information from the one or more client devices (20) at predetermined polling intervals; and
displaying on a display device (17) a menu screen for displaying a smart polling button and displaying, when the smart polling button is operated by a user, a smart polling screen for displaying the polling intervals individually set for the one or more client devices (20).
